**Europäisches Patentamt**

**European Patent Office**

**Office européen des brevets**

(19)

(11) Veröffentlichungsnummer : **0 358 164 B1**

(12) # EUROPÄISCHE PATENTSCHRIFT

(45) Veröffentlichungstag der Patentschrift :
**02.12.92 Patentblatt 92/49**

(51) Int. Cl.⁵ : **G01M 3/04, E04B 1/92**

(21) Anmeldenummer : **89116366.9**

(22) Anmeldetag : **05.09.89**

(54) **Verfahren zum Herstellen eines Leckanzeige- und/oder Wärmedämmspaltes zwischen einer Wand und Verkleidungsplatten sowie hierfür verwendbare Verkleidungsplatten.**

(30) Priorität : **07.09.88 DE 3830439**

(43) Veröffentlichungstag der Anmeldung :
**14.03.90 Patentblatt 90/11**

(45) Bekanntmachung des Hinweises auf die
Patenterteilung :
**02.12.92 Patentblatt 92/49**

(84) Benannte Vertragsstaaten :
**AT BE CH DE ES FR GB IT LI NL SE**

(56) Entgegenhaltungen :
**EP-A- 0 111 235
FR-A- 2 311 292
PATENT ABSTRACTS OF JAPAN, Band 11, Nr.
194 (P-588)(2641), 23. Juni 1987; & JP-A-62
17628**

(73) Patentinhaber : **Steuler-Industriewerke GmbH
Postfach 1448 Georg-Steuler-Strasse 175
W-5410 Höhr-Grenzhausen (DE)**

(72) Erfinder : **Rohringer, Ernst
Waldstrasse 18
W-5411 Hilgert (DE)**
Erfinder : **Zakrzewski, Erhard
Rathausstrasse 54
W-5410 Höhr-Grenzhausen (DE)**

(74) Vertreter : **Vossius & Partner
Siebertstrasse 4 P.O. Box 86 07 67
W-8000 München 86 (DE)**

## Beschreibung

Die Erfindung betrifft ein Verfahren zum Herstellen eines Spaltes zwischen einer Oberfläche einer Wand und an dieser verankerten Verkleidungsplatten wie in Anspruch 1 definiert sowie eine entsprechend ausgebildete Verkleidungsplatte nach Anspruch 13.

Es ist bekannt, Wände mit Hilfe von daran befestigten Verkleidungsplatten zu schützen. Dies ist insbesondere dann zweckmäßig, wenn die Wände als Betonkonstruktionen ausgeführt sind, wobei dann die Verkleidungsplatten zum Schutze dieser Betonkonstruktionen in die Schalung eingelegt und mit Hilfe von Ankern zum Befestigen mit einbetoniert werden. Dabei werden insbesondere Thermoplastplatten verwendet, die nach dem Ausschalen kunststoffverschweißt werden können und so eine flüssigkeits- und gasdichte Auskleidung von Behältern, Türmen, Sümpfen oder Kanalrohrleitungen bilden.

Darüber hinaus besteht häufig die Notwendigkeit, die Auskleidung während des Betriebes auf Dichtigkeit zu prüfen, und zwar vorzugsweise über eine sogenannte Leckspaltanzeige. Bei dieser Art der Dichtigkeitsprüfung muß zwischen Auskleidungsplatte und Wandoberfläche ein in seiner Breite definierter Luftspalt vorgesehen und aufrechterhalten werden. Bei Undichtigkeiten wird Leckflüssigkeit durch diesen Luftspalt einem Leckanzeigegerät zugeführt; der Spalt kann aber auch unter Luftüberdruck oder -unterdruck gesetzt oder mit einer Sperrflüssigkeit gefüllt werden. Im Rahmen der Erfindung kann dieser Spalt auch zur Verringerung des Wärmedurchgangs dienen.

Der Erfindung liegt die Aufgabe zugrunde, ein Verfahren zum Herstellen eines Spaltes, insbesondere eines Leckanzeige- und /oder Wärmedämmspaltes, zwischen einer Wand und Verkleidungsplatten sowie hierfür verwendbare Verkleidungsplatten anzugeben, wobei ein ausreichend breiter und wohldefinierter Spalt in einfacher Weise sichergestellt werden soll.

Diese Aufgabe wird erfindungsgemäß dadurch gelöst, daß auf der Rückseite der Verkleidungsplatte vor ihrem Befestigen an der Wand eine Zwischenschicht aufgebracht wird, die nach dem Befestigen der Verkleidungsplatten an der Wand und insbesondere nach dem Aushärten der Wandoberfläche unter Bildung eines Spaltes entfernt wird. Durch diese auf der Rückseite der Verkleidungsplatte aufgebrachte Zwischenschicht, die eine wohldefinierte Dicke aufweist, wird ein wohldefinierter Abstand der Rückseite der Verkleidungsplatte von der Wandoberfläche sichergestellt, und zwar insbesondere auch dann, wenn die mit geeigneten Ankern versehene Verkleidungsplatte bei der Herstellung der Betonkonstruktion in die Schalung eingelegt und mit einbetoniert wird, da der fließende Beton den auszugießenden Raum bis zur Zwischenschicht voll ausfüllt. Nach dem Aushärten des Betons wird dann die Zwischenschicht in geeigneter Weise entfernt, so daß ein in seiner Breite definierter Spalt zwischen Betonoberfläche und Rückseite der Verkleidungsplatte verbleibt.

Die Dicke der Zwischenschicht und damit die Breite des schließlich erhaltenen Spalts beträgt vorzugsweise von etwa 1 mm bis etwa 20 mm.

Die Zwischenschicht kann in unterschiedlicher Weise hergestellt werden, wenn nur aufgrund der Wahl des hierfür verwendeten Materials sichergestellt ist, daß es zum Ausbilden des Spaltes nachträglich entfernt werden kann, beispielsweise durch Abschmelzen bei Temperaturerhöhung oder durch Herauslösen mit Hilfe eines Lösungsmittels. Die Zwischenschicht wirkt also während des Einbetonierens der Verkleidungsplatte als Distanzmaterial, das anschließend entfernt wird.

Als Material für die Zwischenschicht kann beispielsweise ein geeignetes Wachs verwendet werden, das durch Temperaturerhöhung aus dem Zwischenraum herausgeschmolzen und an der tiefsten oder günstigsten Stelle der ausgekleideten Betonkonstruktion oder des gewünschten Auskleidungsbereiches abgesaugt oder in sonstiger Weise entnommen wird. Die Zwischenschicht kann auch aus einem anderen, durch Lösungsmittel herauslösbaren Material bestehen.

Bei der Verflüssigung des Materials der Zwischenschicht bzw. der Lösung dieses Materials dringt dieses in die teilweise poröse Betonoberfläche ein und kann so auf dieser Betonoberfläche einen Schutzüberzug bilden, so daß der hinter der Verkleidung befindliche Beton gegen eventuell eindringende Leckflüssigkeit geschützt wird.

Das Aufbringen der Zwischenschicht auf die Rückseite der Verkleidungsplatten kann beispielsweise durch direktes Aufschmelzen oder durch eine andere geeignete Montagetechnik, wie Aufkleben, Klemmen oder Schweißen, vor oder nach der Montage der Verkleidungsplatten auf der Betonschalung erfolgen.

Zur Stützung der Zwischenschicht während der Montage kann in vorteilhafter Weise eine Verstärkung, etwa in Form von Stützmaterial, eingearbeitet werden, die nach dem Entfernen des Materials der Zwischenschicht in dem Spalt verbleibt.

In die Zwischenschicht können in vorteilhafter Weise auch Distanzhalter eingearbeitet werden, die zur Sicherung der Spaltbreite unter mechanischer Belastung der Auskleidung dienen und die auch nach dem Entfernen der Zwischenschicht in dem Spalt verbleiben.

Die Anker und die gegebenenfalls dazwischenliegenden Distanzhalter oder die Plattenprofilierung können bereits fester Bestandteil der Plattenrückseite sein, während die später aufgebrachte Zwischenschicht die rückseitige Plattenoberfläche abschließt und die Distanzhalter sowie die Plattenprofilierung sowie eventuell an den Ankern vorgesehene Abstandsstufen einbettet.

Die Zwischenschicht kann vorzugsweise auch aus einem plattenrückseitig aufgebrachten porösen Material bestehen, z.B. aus einer Matte, die zu der Wandoberfläche hin durch eine weitgehend dichte Folie abgesperrt wird und dadurch die Wandoberfläche zumindest teilweise und provisorisch vor durchtretender Leckflüssigkeit schützt.

Alternativ kann auch auf der Auskleidungsplatte rückseitig eine zweite Platte vorgesehen werden, die durch geeignete Profilierung einer der beiden Platten oder durch dazwischen angeordnete Distanzhalter einen Spalt zwischen der eigentlichen Auskleidungsplatte und der Wandoberfläche freihält. In diesem Fall kann auf die Ausbildung der entfernbaren Zwischenschicht verzichtet werden.

Obwohl die Erfindung in der vorliegenden Beschreibung weitgehend im Zusammenhang mit einer Wand aus Beton beschrieben wird, können die erfindungswesentlichen Merkmale auch bei anders gearteten Wandkonstruktionen verwirklicht werden: entscheidend ist der erfindungswesentliche Grundgedanke, wonach zwischen einer Wandoberfläche und der Rückseite einer Auskleidungsplatte ein wohldefinierter Spalt sichergestellt wird, beispielsweise mit Hilfe einer zunächst vorgesehenen Zwischenschicht, die später durch geeignete Maßnahmen entfernt wird, oder in Form einer Doppelplatte, die zwischen den beiden Platten zum Einhalten der Spaltbreite geeignete Distanzhalter aufweist.

Die Erfindung wird nachstehend mit Bezug auf die anliegende Zeichnung näher erläutert. Es zeigen:

Figur 1 einen Schnitt durch eine verkleidete Wand mit der noch nicht herausgelösten Zwischenschicht,

Figur 2 einen Schnitt durch eine verkleidete Wand mit herausgelöster Zwischenschicht und imprägnierter Wandoberfläche,

Figur 3 einen Schnitt durch eine verkleidete Betonwand mit noch nicht herausgelöster Zwischenschicht mit Stützgewebe und eingebetteten Distanzhaltern,

Figur 3A eine Aufsicht der Ausführungsform gemäß Figur 3 in Richtung des Pfeils A, und

Figur 4 einen Schnitt durch eine verkleidete Wand mit einem Spalt zwischen der Verkleidungsplatte und einer zweiten rückseitigen Platte mit zwischenliegenden Distanzhaltern oder -profilierung.

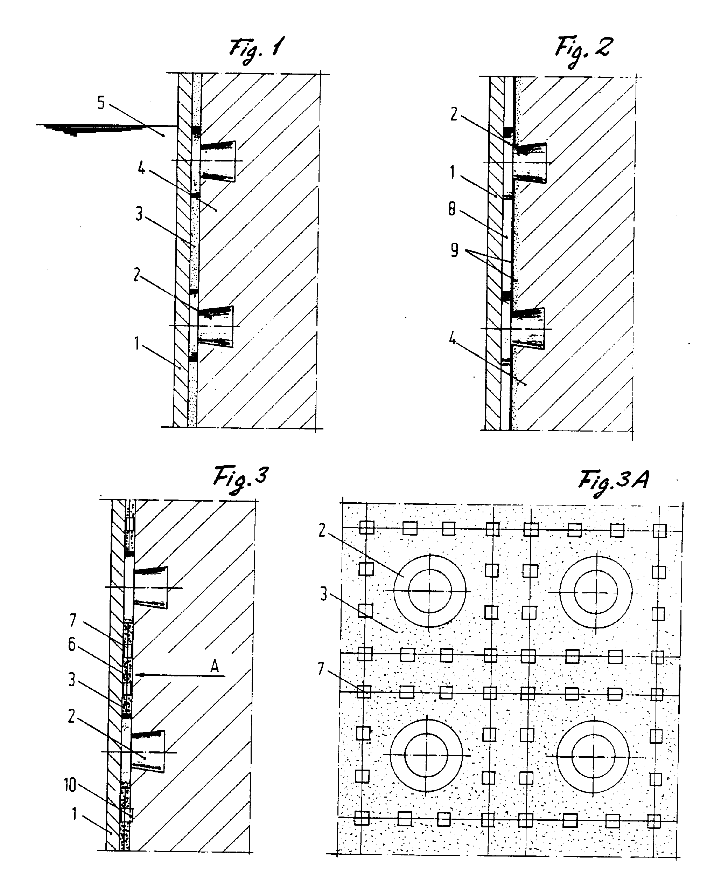

Gemäß Figur 1 ist eine Verkleidungsplatte 1 über Anker 2 in der Wand 4 verankert; wenn die Wand vorzugsweise aus Beton besteht, so werden die Anker 2 beim Betonieren mit eingegossen. Die Verkleidungsplatte 1 dient zum Schutz der Wandoberfläche vor Einwirkung durch ein Medium 5, z.B. Flüssigkeit oder Gas. Das Material der Zwischenschicht 3 befindet sich noch zwischen der Wandoberfläche und der Verkleidungsplatte 1 in nicht herausgelöstem Zustand. Die Form der Anker 2, z.B. Noppen oder Streifen, ist im Rahmen der Erfindung unerheblich.

Die Schnittansicht gemäß Figur 2 unterscheidet sich von der gemäß Figur 1 lediglich darin, daß nunmehr die Zwischenschicht 3 herausgelöst wurde, so daß der gewünschte Spalt 8 entsteht. Bei dem Herauslösen der Zwischenschicht 3, dessen Material bei diesem Vorgang verflüssigt oder gelöst worden ist, erfolgt vorzugsweise eine Imprägnierung bzw. ein Oberflächenschutz 9 der Wandoberfläche (z.B. poröse Betonoberfläche).

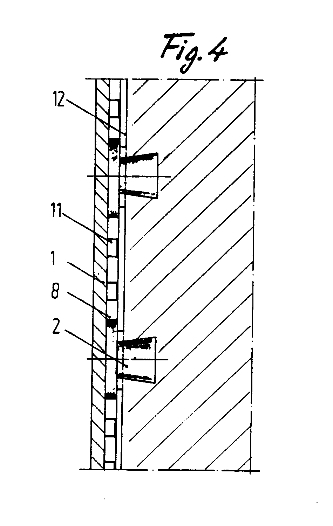

Bei der in Figur 3 dargestellten Ausführungsform ähnlich der Figur 1 ist die Zwischenschicht 3 durch ein Stützgewebe 6 verstärkt, in das darüber hinaus Distanzhalter 7 eingelagert sind. Nach dem Herauslösen der Zwischenschicht 3 und Ausbilden eines Spaltes verbleiben die nicht-lösbaren Distanzhalter 7 sowie das Stützgewebe 6 in dem Spalt. Die Distanzhalter 7 können auch direkt auf der Rückseite der Platte 1 als Plattenbestandteil, also einstückig mit der Platte, oder in Form einer Oberflächenprofilierung ausgebildet sein; ferner ist es möglich, die Distanzhalter 7 nachträglich oder vor dem Aufbringen der Zwischenschicht an der Plattenrückseite zu befestigen oder in die bereits vorhandene Zwischenschicht einzubetten.

Um ein Verrutschen der Distanzhalter 7 zu vermeiden, können diese mit einem Ende 10 über die Zwischenschicht 3 vorstehen und beim Einbetonieren in den Beton eingebunden und fixiert werden.

Anstelle einzelner Distanzhalter kann in die Zwischenschicht auch ein mediumdurchlässiges Gewebe oder eine Matte eingebettet werden oder das mediumdurchlässige Gewebe oder die Matte dienen selbst als Zwischenschicht.

Die Figur 3A zeigt die Rückseite einer Verkleidungsplatte 1 gemäß Figur 3. Durch die im Spalt 8 zwischen den Ankern 2 verbleibenden Distanzhalter 7 wird die Breite des Spaltes 8 zwischen der Verkleidungsplatte 1 und der Wandoberfläche 4 sichergestellt.

Bei der in Figur 4 dargestellten Ausführungsform wird der Spalt 8 durch eine auf der Rückseite der Auskleidungsplatte 1 angebrachte zweite Platte 12 mit zwischengelegten oder zwischenbefestigten Distanzhaltern 11 gebildet. Anstelle der Distanzhalter 11 kann auch eine Profilierung einer oder beider Platten vorgesehen werden. In diesem Fall kann auf eine entfernbare Zwischenschicht verzichtet werden, da durch die Doppelplatte mit dazwischen liegenden Abstandshaltern der gewünschte Spalt 8 ohne weitere Maßnahmen sichergestellt wird.

**Patentansprüche**

1. Verfahren zum Herstellen eines Leckanzeigespaltes (8) zwischen einer Oberfläche einer Wand (4), insbesondere Betonoberfläche, und an dieser befestigten Verkleidungsplatten (1), dadurch gekennzeichnet, daß auf der Rückseite der Verkleidungsplatte (1) und/oder auf der Oberfläche der Wand (4) vor dem Befestigen der Verkleidungsplatten (1) eine Zwischenschicht (3) aufgebracht wird, die nach dem Befestigen der Verkleidungsplatten (1) an der Wand (4) und insbesondere nach dem Aushärten der Wandoberfläche, unter Bildung des Leckanzeigespaltes (8) entfernt wird.

2. Verfahren nach Anspruch 1, dadurch gekennzeichnet, daß die Befestigung der Verkleidungsplatten (1) an der Wand (4) mittels Ankern (2) erfolgt.

3. Verfahren nach Anspruch 2, dadurch gekennzeichnet, daß die Anker (2) in Form von Abstandshaltern ausgebildet sind.

4. Verfahren nach einem der Ansprüche 1 bis 3, dadurch gekennzeichnet, daß die Zwischenschicht (3) aus einem durch Temperaturerhöhung oder durch Lösungsmittel herauslösbarem Material besteht.

5. Verfahren nach einem der Ansprüche 1 bis 4, dadurch gekennzeichnet, daß die Zwischenschicht (3) aus einem Material besteht, durch das beim Herauslösen im gelösten Zustand eine Imprägnierung und/oder ein Schutzüberzug für die Wandoberfläche gebildet wird.

6. Verfahren nach einem der Ansprüche 1 bis 5, dadurch gekennzeichnet, daß das flüssige Material der herausgelösten Zwischenschicht (3) an der jeweils tiefsten Stelle der Auskleidung oder des jeweiligen Auskleidungsabschnittes entnommen wird.

7. Verfahren nach einem der Ansprüche 1 bis 6, dadurch gekennzeichnet, daß die Zwischenschicht (3) durch ein Stützmaterial (6) verstärkt wird.

8. Verfahren nach einem der Ansprüche 1 bis 7, dadurch gekennzeichnet, daß in die Zwischenschicht (3) Distanzhalter (7) eingebettet sind.

9. Verfahren nach Anspruch 8, dadurch gekennzeichnet, daß die Distanzhalter (7) mit einem Ende (10) in den Beton (4) eingegossen werden.

10. Verfahren nach einem der Ansprüche 2 bis 9, dadurch gekennzeichnet, daß die Distanzhalter (7) und/oder die Anker (2) bereits bei der Herstellung der Verkleidungsplatte (1) auf deren Rückseite als Plattenbestandteil vorgesehen oder nachträglich befestigt oder aufgebracht werden und die entfernbare Zwischenschicht (3) zwischen diese Distanzhalter (7) bzw. Anker (2) eingebracht wird.

11. Verfahren nach einem der Ansprüche 1 bis 10, dadurch gekennzeichnet, daß die Zwischenschicht (3) bzw. der Leckanzeigespalt (8) durch eine rückseitige Profilierung (11) der Verkleidungsplatten (1) mit nachfolgender Platten- oder Folienabdeckung (12) gebildet wird.

12. Verfahren nach einem der Ansprüche 1 bis 10, dadurch gekennzeichnet, daß die Zwischenschicht (3) bzw. der Leckanzeigespalt (8) durch das rückseitige Aufbringen einer zweiten Platte (12) mit Profilierung gebildet wird.

13. Verkleidungsplatte für Betonwände und zur Durchfürung des Verfahrens nach einem der Ansprüche 1 bis 12, gekennzeichnet durch rückseitig angeordnete Abstandshalter und/oder Anker (2) in Form von Abstandshaltern, und eine auf der Rückseite aufgebrachte, entfernbare Schicht (3).

14. Verkleidungsplatte nach Anspruch 13, dadurch gekennzeichnet, daß die Abstandshalter in Form von Profilierungen ausgebildet sind.

15. Verkleidungsplatte nach Anspruch 13 oder 14, dadurch gekennzeichnet, daß in die Schicht (3) ein Stützmaterial (6) eingelagert ist.

16. Verkleidungsplatte nach einem der Ansprüche 13 bis 15, gekennzeichnet durch eine zusätzliche Platten- oder Folienabdeckung (12) im Abstand zur Rückseite der Verkleidungsplatte.

17. Verkleidungsplatte nach Anspruch 16, dadurch gekennzeichnet, daß die Platten- oder Folienabdeckung (12) eine zur Verkleidungsplatte hinweisende Profilierung aufweist.

18. Verkleidungsplatte nach einem der Ansprüche 13 bis 17, dadurch gekennzeichnet, daß dis Schicht (3) aus einem durch Temperaturerhöhung oder durch Lösungsmittel herauslösbaren Material besteht.

19. Verkleidungsplatte nach einem der Ansprüche 13 bis 18, dadurch gekennzeichnet, daß die Dicke der Schicht (3) bzw. der Abstand zwischen der Rückseite der Verkleidungsplatte und der zusätzlichen Platten- oder Folienabdekkung (12) von 1 mm bis 20 mm, vorzugsweise von 5 mm bis 10 mm, beträgt.

20. Verfahren nach einem der Ansprüche 1 bis 12, dadurch gekennzeichnet, daß die Dicke der Schicht (3) bzw. der Abstand zwischen der Rückseite der Verkleidungsplatte und der zusätzlichen Platten- oder Folienabdeckung (12) vom 1 mm bis 20 mm, vorzugsweise von 5 mm bis 10 mm, beträgt.

## Claims

1. A method for producing a leak indication gap (8) between a surface of a wall (4), more particularly a concrete surface, and lining panels (1) attached thereto,
   characterised in that an intermediate layer (3) is applied onto the reverse of the lining panel (1) and/or on the surface of the wall (4) before the attachment of the lining panels (1), and said layer is removed after the attachment of the lining panels (1) to the wall (4), and particularly after the wall surface has hardened, by the formation of a leak indication gap (8).

2. A method according to Claim 1,
   characterised in that the lining panels (1) are attached to the wall (4) by means of tie rods (2).

3. A method according to Claim 2,
   characterised in that the tie rods (2) are constructed in the form of distance pieces.

4. A method according to any one of Claims 1 to 3,
   characterised in that the intermediate layer (3) is made from a material which can be eliminated by an increase in temperature or by solvents.

5. A method according to any one of Claims 1 to 4,
   characterised in that the intermediate layer (3) is made from a material by which an impregnation and/or a protective coating for the wall surface is formed during the elimination in the dissolved state.

6. A method according to any one of Claims 1 to 5,
   characterised in that the fluid material of the eliminated intermediate layer (3) at the respective deepest point of the facing or of the respective facing section is removed.

7. A method according to any one of Claims 1 to 6,
   characterised in that the intermediate layer (3) is reinforced by a reinforcing material (6).

8. A method according to any one of Claims 1 to 7,
   characterised in that distance pieces (7) are embedded in the intermediate layer (3).

9. A method according to Claim 8,
   characterised in that the distance pieces (7) are cast with one end (10) in the concrete (4).

10. A method according to any one of Claims 2 to 9,
    characterised in that the distance pieces (7) and/or the tie rods (2) are provided at the time the lining panel (1) is manufactured on its reverse as a component of said panel or can be attached or applied subsequently and the removable intermediate layer (3) is inserted between these distance pieces (7) or tie rods (2).

11. A method according to any one of Claims 1 to 10,
    characterised in that the intermediate layer (3) or the leak indication gap (8) is formed by profiling (11) on the reverse of the lining panels (1) with a subsequent covering (12) with panels or plastic sheeting.

12. A method according to any one of Claims 1 to 10,
    characterised in that the intermediate layer (3) or the leak indication gap (8) is formed by the application of a second panel (12) with profiling to the reverse.

13. A lining panel for concrete walls and for performing the method according to any one of Claims 1 to 12,
    characterised by distance pieces disposed on the reverse of said panel and/or tie rods (2) in the form of distance pieces, and a removable layer (3) applied to the reverse.

14. A lining panel according to Claim 13,
    characterised in that the distance pieces are constructed in the form of profiling.

15. A lining panel according to Claim 13 or 14,
    characterised in that a reinforcing material (6) is embedded in the layer (3).

16. A lining panel according to any one of Claims 13 to 15,
    characterised by an additional covering (12) with panels or plastics sheeting at a distance from the reverse of the lining panel.

17. A lining panel according to Claim 16,
    characterised in that the covering (12) with panels or plastics sheeting comprises profiling pointing towards the lining panel.

18. A lining panel according to any one of Claims 13 to 17,
    characterised in that the layer (3) is made from a material which can be eliminated by an increase in temperature or by solvents.

**19.** A lining panel according to any one of Claims 13 to 18,

**characterised in that** the thickness of the layer (3) or the distance between the reverse of the lining panel and the additional covering (12) with panels or plastics sheeting is 1 mm to 20 mm, preferably 5 mm to 10 mm.

**20.** A method according to any one of Claims 1 to 12, **characterised in that** the thickness of the layer (3) or the distance between the reverse of the lining panel and the additional covering (12) with panels or plastics sheeting is from 1 mm to 20 mm, preferably from 5 mm to 10 mm.

**Revendications**

**1.** Procédé de fabrication d'un interstice d'indication de fuite (8) entre une surface d'une paroi (4), en particulier une surface de béton, et de plaques de revêtement (1) fixées à cette dernière, caractérisé en ce que sur la face arrière de la plaque de revêtement (1) et/ou sur la surface de la paroi (4) est appliqué avant la fixation des plaques de revêtement (1) une couche intermédiaire (3) qui est éliminée après la fixation des plaques de revêtement (1) sur la paroi (4), et en particulier après le durcissement de la surface de paroi, en formant l'interstice d'indication de fuite (8).

**2.** Procédé suivant la revendication 1, caractérisé, en ce que la fixation des plaques de revêtement (1) à la paroi (4) est réalisée au moyen d'éléments d'ancrage (2).

**3.** Procédé suivant la revendication 2, caractérisé en ce que les éléments d'ancrage (2) sont réalisés sous la forme d'éléments d'écartement.

**4.** Procédé suivant l'une quelconque des revendications 1 à 3, caractérisé en ce que la couche intermédiaire (3) est constituée par une matière qui peut être enlevée par une augmentation de température ou par un produit dissolvant.

**5.** Procédé suivant l'une quelconque des revendications 1 à 4, caractérisé en ce que la couche intermédiaire (3) est constituée par une matière par laquelle est réalisée lors de l'enlèvement à l'état dilué, une imprégnation et/ou une couche protectrice de la surface de paroi.

**6.** Procédé suivant l'une quelconque des revendications 1 à 5, caractérisé en ce que la matière liquide de la couche intermédiaire (3) enlevée est retirée à l'endroit respectivement le plus bas du revêtement ou de la section de revêtement respective.

**7.** Procédé suivant l'une quelconque des revendications 1 à 6 caractérisé en ce que la couche intermédiaire (3) est renforcée par une matière de soutien (6).

**8.** Procédé suivant l'une quelconque des revendications 1 à 7, caractérisé en ce que dans la couche intermédiaire (3) sont insérées des entretoises (7).

**9.** Procédé suivant la revendication 8, caractérisé en ce que les entretoises (7) ont une extrémité (10) coulée dans le béton (4).

**10.** Procédé suivant l'une quelconque des revendications 2 à 9, caractérisé en ce que les entretoises (7) et/ou les éléments d'ancrage (2) sont prévus déjà lors de la fabrication de la plaque de revêtement (1), sur la face arrière de cette dernière, en tant que partie constitutive de la plaque ou sont fixés ou appliqués ultérieurement et en ce que la couche intermédiaire (3) qui peut être éliminée est placée entre ces entretoises (7) et les éléments d'ancrage (2).

**11.** Procédé suivant l'une quelconque des revendications 1 à 10, caractérisé en ce que la couche intermédiaire (3) ou l'interstice d'indication de fuite (8) est formée par un profilage (11) de la face arrière des plaques de revêtement (1) et par un recouvrement subséquent en forme de plaque ou de feuille (12).

**12.** Procédé suivant l'une quelconque des revendications 1 à 10, caractérisé en ce que la couche intermédiaire (3) ou l'interstice d'indication de fuite (8) est réalisée par l'application sur la face arrière, d'une seconde plaque (12) comportant un profilage.

**13.** Plaque de revêtement pour des parois en béton et pour la mise en oeuvre du procédé suivant l'une quelconque des revendications 1 à 12, caractérisée par des éléments d'écartement agencés sur sa face arrière et/ou par des éléments d'ancrage (2) sous la forme d'éléments d'écartement, et par une couche (3) qui peut être éliminée et qui est appliquée sur la face arrière.

**14.** Plaque de revêtement suivant la revendication 13, caractérisée en ce que les éléments d'écartement sont réalisés sous la forme de profilages.

**15.** Plaque de revêtement suivant la revendication 13 ou 14, caractérisée en ce qu'une matière de soutien (6) est incorporèe dans la couche (3).

16. Plaque de revêtement suivant l'une quelconque des revendications 13 à 15, caractérisée par un recouvrement en forme de plaque ou de feuille (12) agencé à distance sur la face arrière de la plaque de revêtement.

17. Plaque de revêtement suivant la revendication 16, caractérisée en ce que le recouvrement en forme de plaque ou de feuille (12) présente un profilage tourné vers la plaque de revêtement.

18. Plaque de revêtement suivant l'une quelconque des revendications 13 à 17, caractérisée en ce que la couche (3) est constituée par une matière qui peut être enlevée par une élévation de température ou par un produit dissolvant.

19. Plaque de revêtement suivant l'une quelconque des revendications 13 à 18, caractérisé en ce que l'épaisseur de la couche (3) ou la distance de la face arrière de la plaque de revêtement et le recouvrement en forme de plaque ou de feuille (12) est compris entre 1 mm et 20 mm, de préférence de 5 mm et 10mm.

20. Procédé suivant l'une quelconque des revendications 1 à 12, caractérisé en ce que l'épaisseur de la couche (3) ou la distance de la face arrière de la plaque de revêtement et le recouvrement en forme de plaque ou de feuille (12) est compris entre 1 mm et 20 mm, de préférence de 5 mm et 10mm.

Fig. 1

Fig. 2

Fig.3

Fig.3A

## Fig.4